# EUROPEAN PATENT APPLICATION

(11) **EP 1 307 034 A1**
(43) Date of publication of application: **02.05.2003**
(21) Application number: 01308973.5
(22) Date of filing: 23.10.2001
(51) Int. Cl.: H04M 1/60, H04M 1/05

(54) **Mobile telephone with separable microwave emitter connected with optical fibre link**

(71) Applicant: Franks, Albert, Twickenham, Middlesex TW1 2JY (GB)
(72) Inventor: Franks, Albert, Twickenham, Middlesex TW1 2JY (GB)
(74) Representative: Tollett, Ian

(57) **Abstract**

Mobile telecommunications apparatus is disclosed in which the microwave transceiver and antenna (1,2) are physically separated from the handset (20) and data is transmitted between the two along an optical fibre (5). Alternatively, a "hands free" system for a mobile telephone (40) is provided in which communication between the earphone and microphone headset (45) and the telephone is provided by an optical fibre connection (42). The provision of an optical fibre connection in both cases results in lower background noise caused by microwave radiation and reduced health risks.

## Description

The present invention relates to telecommunications apparatus, and in particular to mobile telecommunication apparatus which can be used without positioning the antenna close to the body (and in particular the head) of the user.

Mobile telephones are increasingly popular in the developed world, with the number of users increasing year-on-year. In Scandinavian countries such as Finland, it is estimated that more than 60% of the population own a mobile telephone. The rest of the developed world is catching up fast. It is beyond doubt that mobile telephones and related technology have a tremendous commercial importance.

Mobile telephones work by receiving and transmitting electromagnetic radiation in the microwave region (i.e. from 10⁹ to 10¹¹ hertz). Although this works well from a telecommunications standpoint, a disadvantage of using microwave radiation is that it is thought to be damaging to the human body. The antenna and microwave transceiver of a mobile telephone effectively acts as a wave-guide, which concentrates the microwave radiation in the vicinity of the antenna. This applies to both the transmission and reception of microwave radiation.

A second disadvantage of using microwave radiation is that it tends to result in background noise in adjacent electronics, which can lead to conversations which are difficult or even impossible to hear. Background noise is a particular problem for users of hearing aids.

The majority of mobile telephones house the microwave transceiver and antenna in the same unit as the microphone and speaker (commonly a handset unit). The microwave transceiver must thus be positioned close to the user's head in order to use the telephone. Microwave radiation is therefore concentrated in the vicinity of the user's head.

In order to address these problems, so-called "hands free" mobile telephones have been developed. These have a microphone and an earpiece speaker remote from the telephone handset, and joined to the handset by a radio frequency link, an infra red link, or by means of a hardwire connection. The user can therefore use the telephone without having the transceiver close to his head. Examples of "hands free" systems are disclosed in GB 2294836A (Jones), GB 2277422A (Universal Exchange), US 5943627 (Kim *et al.*), US 5966643 (Alcatel), WO 98/26513 (Siemens) and WO 99/60764 (White).

However, in the case of "hands free" systems which employ a hardwire connection, it has been demonstrated that there is some coupling between the antenna in the telephone and the wire which leads to the remote speaker and microphone. Accordingly, there is a possibility that even "hands free" technology may be damaging to the human body, due to radiation emitted from the wire in use.

A further disadvantage of these systems is that it is impractical for the wire joining the speaker and earpiece to be very long. This means that, in practice, the telephone handset (and therefore the microwave transceiver) must be placed somewhere close to the user's body, for example in his pocket or attached to a belt clip. Accordingly, even with a "hands free" telephone, there is still the possibility of microwave radiation's causing damage to the user's body. If the telephone is placed on a belt clip, it is likely to be close to the genital region, where the absorption of microwave radiation might well be damaging.

As described above, as an alternative to a hardwire connection, hands free systems can employ infra red radiation for data communication between the transceiver unit and the earphone/microphone. However, infra red radiation does not work particularly well in sunlight. Also, the power requirements for the headset transmitter are high, which necessitates a large battery (resulting in an unwieldy headset). Finally, although infra red radiation is to a certain extent scattered off walls and other surfaces, ideally there should be a clear line of sight between the transmitter and detector, which puts practical constraints on the use of such systems.

In the case of radio frequency data communication, there are a number of possible disadvantages. First, there is a worry that it may be possible to intercept the radio signal between the two units, which would severely compromise security. Not only could the conversation in question be "tapped", but the location of the user could be traced, and the device being used could be remotely identified. Secondly, there is a risk that electromagnetic radiation created by the mobile telephone could interfere with the headset receiver.

WO 99/67935 (Consulting, Comunicacio i Disseny, SL) discloses a system in which a unit comprising the antenna and transceiver can be physically separated from the telephone handset, with data communication between the two units being provided with or without cable.

EP 0871236 A2 (Nokia) discloses an antenna for a mobile telephone which can be worn on a wristband. It appears that the antenna and the telephone are connected by means of coaxial cable.

DE 19732359 discloses a mobile telephone in which the (dipole) antenna can be physically separated from the main unit and data-linked by means of a cable.

EP 0833455 A2 (Nokia) describes a mobile telephone with a releasable attachment device which can be attached to an article of clothing worn by a user, and can include an antenna. However, the antenna in the removable unit appears to be an auxiliary antenna which only functions when the unit is connected with the phone, and the auxiliary antenna is in electrical connection with the main antenna in the handset body.

According to a first aspect of the present invention, there is provided telecommunications apparatus, comprising a first unit having a first transceiver for a first type of signal which is a microwave signal, a second transceiver for a second type of signal, and a first converter for converting said microwave signal into said second type of signal and vice versa, and a second unit having a third transceiver for said second type of signal, a fourth transceiver for a third type of signal which is an audio signal and a second converter for converting said second type of signal to said audio signal and vice versa, wherein the first unit and the second unit are connected by an optical fibre and wherein said second type of signal is a signal which is able to be transmitted along said optical fibre.

Because the units are physically separable and are not linked by microwave radiation, the telephone can be used by placing the second unit but not the first unit close to the user's body (e.g. head). The first unit (which contains the microwave transceiver) can be placed a safe distance from the user, for example on a table or in a car glove compartment.

It has been discovered that the provision of an optical fibre as a means of data communication between the two units reduces considerably (and can effectively eliminate) the transmission of microwave radiation to the headset, which in turn reduces the background noise and therefore the ease of use (particularly for hearing aid users). By implication, any health risk caused by microwave radiation will also be reduced, or even effectively eliminated.

In a preferred embodiment, the second type of signal is provided by an infra-red beam or by light in the visible part of the electromagnetic spectrum. Optical transceiver modules in the first and second units serve to modulate the data signal.

The provision of an optical fibre addresses the problems that arise when a non-material infra red link is used, in that, with the fibre link, there does not need to be a clear line of sight between the two units, the power requirements are lower, and the unit can be used in direct sunlight.

In one embodiment, the first and second unit may be adapted to be joined together to form a single unit, for example for short-term use when this is more convenient to have all of the components of the telephone present in a single unit.
In an alternative embodiment, the telecommunications apparatus may additionally comprise a third unit having a fifth transceiver for a fourth type of signal, a sixth transceiver for a fifth type of signal and a third converter for converting the fourth type of signal to the fifth type of signal, wherein the second unit additionally comprises a seventh transceiver for a receiving said fifth type of signal and a fourth converter for converting said fifth type of signal to said audio signal. The third unit is preferably a base station which is connectable to the telephone network by means of a so-called "land line". Such units are well known in the art for use in so-called "cordless" telephone systems. An aspect of the present invention is that a handset can be provided (the second unit) which can be used either as a mobile telephone (in conjunction with the first unit) or as a cordless telephone using a land-line (in conjunction with the third unit).

The fifth type of signal which provides data communication between the second and third units may be carried by an optical fibre, in which case the seventh transceiver can simply be the same as the third transceiver. Alternatively, the fifth type of signal can be a radio frequency signal, an infra red signal transmitted without a material link, or a hardwire connection.

According to a second aspect of the present invention, there is provided an attachment for a mobile telephone of the type which has a transceiver for a microwave signal, a first converter for converting the microwave signal to a first type of signal, and an input/output for the first type of signal, which attachment comprises a first unit having a first transceiver for said first type of signal, a second transceiver for a second type of signal and a second converter for converting said first type of signal to said second type of signal, and a second unit having a third transceiver for said second type of signal and a third converter for converting said second type of signal into an audio signal, wherein the first unit and the second unit are connected by an optical fibre and wherein said second type of signal is a signal which is able to be transmitted along said optical fibre.

The third converter may convert the second type of signal first into an electrical signal, and then into an audio signal by means of a microphone and earphone combination.

Thus the second aspect of the invention provides a "hands free" kit for a conventional mobile telephone which has the advantages of optical data communication as described in relation to the first aspect of the invention.

Preferably, said attachment comprises means for connecting the first unit to the input/output of a mobile telephone. The first unit may be plugged directly into the telephone, or connected by means of a short hardwire connection.

As with the embodiments according to the first aspect of the invention, the circuits of the inventive apparatus allow for signals from the telephone to be transmitted to the user, and for voice signals from the user to be transmitted back to the telephone.

The second aspect of the invention allows a standard mobile telephone to be moved a safe distance away from the user's body (according to research, even a few centimetres distance produces a dramatic fall in absorbed radiation) such that the link between the telephone and the headset is via an innocuous optical fibre link.

Advantageously, the transceiver circuits of the present invention process analogue rather than digital signals. This is because digital signals generate unwanted noise in hearing aids, making it difficult for hearing aid users to use digital mobile telephones.

A number of embodiments of the present invention will now be illustrated by way of example, with reference to the drawings, in which:
Figure 1 is a block diagram showing the circuit used to implement one embodiment of the present invention;
Figure 2 is a perspective view of apparatus in accordance with the first aspect of the invention;
Figure 2A is a perspective view of apparatus in accordance with the second aspect of the invention; and
Figure 3 is a circuit diagram of a microwave detector employed to test the efficacy of the present invention.

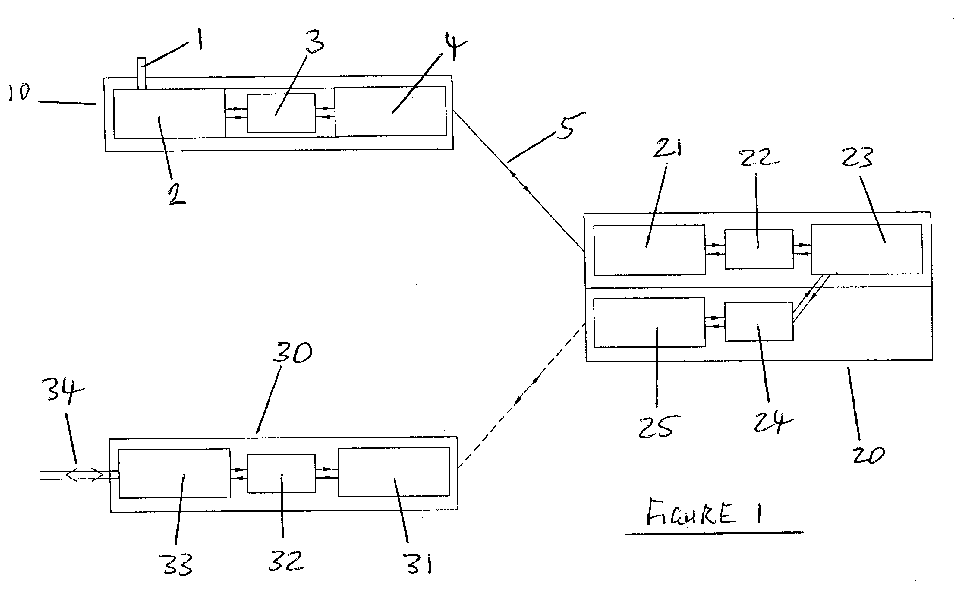

Figure 1 depicts in schematic terms an embodiment of the present invention with mobile unit 10 having antenna 1, microwave transceiver 2, frequency converter 3 and optical module 4. Mobile unit 10 is linked to handset 20 by optical fibre 5.

Handset 20 has optical module 21, frequency converter 22, transceiver 23 (including earphone and microphone - not shown), radio frequency converter 24 and radio frequency transceiver 25.

Optionally, base station 30 is provided. This has radio frequency transceiver 31, radio frequency converter 32, and transceiver 33 connected to land line 34.

In use, antenna 1 of mobile unit 10 picks up a microwave signal comprising data relating to one half of a conversation. This signal is received by transceiver 2, converted to an optical signal by converter 3, modulated by optical module 4 and transmitted along optical fibre 5 to handset 20.

The optical signal is received in handset 20 by optical module 21, converted to an electrical signal by converter 22, and transmitted as an audio signal by transceiver 23.

The system works in reverse to receive an audio signal, convert it to an optical signal, relay it along optical fibre 5 to mobile unit 10, convert it to a microwave signal and transmit it as the other half of a conversation.

Optional base station 30 works as follows. When handset 20 is within range of base station 30, the circuits relating to optical transmission and reception of data to and from mobile unit 10 can be deactivated, and instead circuits relating to the use of converter 24 and RF transceiver 25 are activated.

Thus in use an audio signal is received by transceiver 23, converted to a radio frequency signal by converter 24 and transmitted by RF transceiver 25 to base station 30. The RF signal is received by transceiver 31, converted to an appropriate signal by converter 32 and transmitted by transceiver 33 down land line 34.

The system works in reverse to transmit a signal received on land line 34 as an RF signal to handset 20 where it is converted to an audio signal.

In alternative embodiments, base station 30 and handset 20 may communicate by means of infra red radiation. Alternatively they may be linked by an optical fibre or by a hardwire connection.

Alternatively, the transceiver and converter for the base station signal may be provided in the mobile unit 10 rather than the handset 20.

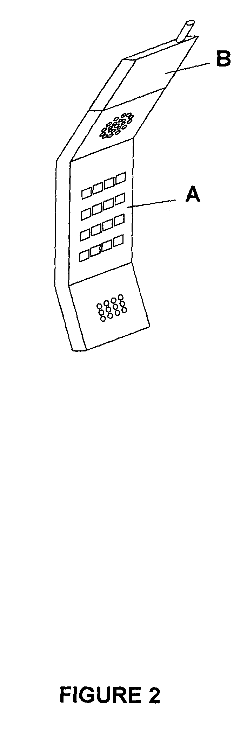

By way of example, Figure 2 illustrates an embodiment of the invention in which the handset and the mobile unit may be conjoined for ease of use. The telephone consists of the parts A and B. These parts can be attached to each other by means of a simple attachment mechanism (not shown) that enables them to be slotted or plugged together, and also allows them to be simply separated from each other. Both parts have independent battery power supplies.

Part A contains all the mechanical, electrical and electronic components that are normally found in a cordless telephone handset.

Part B consists of a microwave transceiver, frequency converter and an optical transceiver module.

### The modes of use of the telephone are as follows:

### Mode 1

This mode is similar to that employed in the normal use of a mobile telephone. The configuration is as shown in Figure 2. The signal path differs from the conventional telephone in that the incoming microwave signal is first converted into an optical signal which is then transmitted to the handset. The outgoing signal from the handset is similarly converted.

### Mode 2

If it is found desirable to remove the microwave antenna from its proximity to the head of the telephone user, it can be separated from the handset and placed on a nearby support or held in the hand (any potential radiation damage suffered by the hand is less likely to have deleterious effects than damage to the head or genital areas). Even a small separation of the antenna from the sensitive areas of the body is beneficial. It has been shown (NPL report EF06/99/319/1) that microwave radiation absorbed by the head is appreciably reduced if the antenna is moved away from the head by a few centimetres.

### Mode 3

Since in this example the handset contains the circuitry of a conventional cordless telephone, it can also be used as a standard cordless telephone linked by radio frequency to a base station connected by landline to a telephone exchange. When in use as a cordless telephone, the microwave transceiver may be switched off manually or automatically when the telephone comes within range of the base unit.

When the telephone is not in use, both batteries may be recharged by insertion of the handset into the base unit as is the normal practice.

Figure 2A depicts a "hands free" system in accordance with the second aspect of the invention. In use, converter 41 is plugged into mobile telephone 40 and converts the signal received by telephone 40 (or the electrical analogue of that signal) into modulated optical signals that are transmitted along optical fibre 42 to converter 43. Converter 43 converts the optical signal to an electrical signal which is transmitted along cable 44 to headset 45, which in turn comprises earpiece 46 and microphone 47. Earpiece 46 relays the electrical signal as an audio signal to be heard by the user.

The system works in reverse by converting an audio signal to an electrical signal which is transmitted from microphone 47 along cable 44 to converter 43. It is then transmitted as an optical signal along fibre 42 to converter 41, where it is converted into a signal which can be transmitted by telephone 40 in the usual manner.

The separation between converters 41 and 43 should be such that effectively no high frequency signals are transmitted between the two. The actual distance will depend on the strength of the signal and the effectiveness of the electromagnetic shielding of the converter housings, but in this embodiment is 500mm.

### EXPERIMENTAL RESULTS

### Theoretical

The strength of a signal generated by a mobile phone is stronger if the base station is a long way off or if the transmission conditions are poor. Depending on the design of the mobile hand set and the antenna positioning, it is estimated that the strength of the signal close to the phone, called the near field, can vary from 20 volts per metre up to more than 100 volts per metre. In other words, a piece of wire one metre long would pick up a signal of between 20 volts and over 100 volts. Thus in the near field there is a high level, amplitude-modulated radio signal of very high frequency in the region of 900 or 1800 MHz. These high frequency signals easily couple with adjacent circuits.

### Interference effect

The modulation used in mobile phones is known as Time Division Multiple Access. This form of modulation consists of short bursts of 100% modulated signal a few msec long at a repetition rate of 217 Hz.

In circuits such as hearing aids, the lengths of wires or circuit boards maybe a few centimetres long and will pick up signals of a small fraction of a volt. Transistors employed in the circuit will be demodulate the signal and produce an audio signal of 217 Hz which is amplified by the hearing aid components to produce a disturbing background signal.

### (After J Barnes, Proc Mobile Phones and Hearing Aids: Hearing Concern Seminar, London pp19-25, February 2000.)

### Antenna effect (Electronics Weekly April 12, 2000)

High frequency signals readily couple across PCBs and other components and if they couple with a length of wire will convert the wire to an antenna. Along the length of the wire there will be nodes and antinodes in the radiation field and the intensity at the headset end will depend on the length and geometry of the wire and the type of termination employed.

### Experimental Results

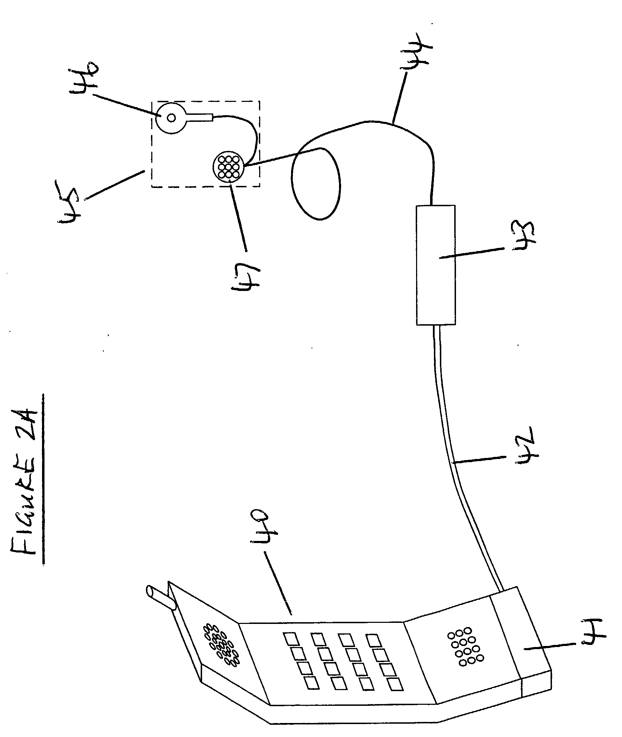

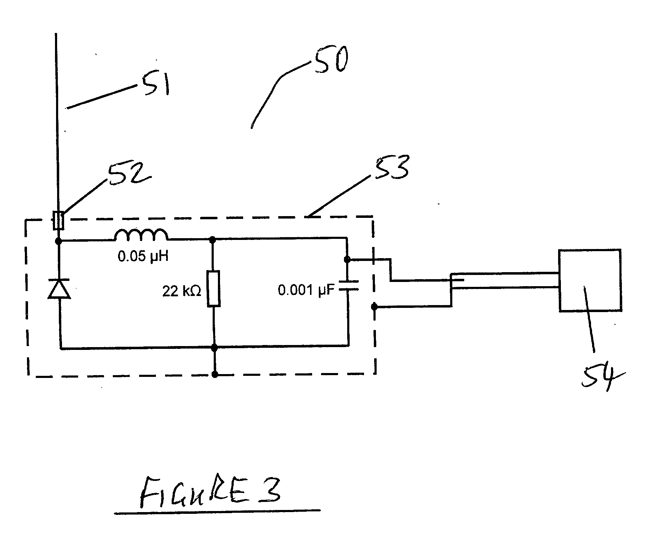

Measurements of the microwave radiation were made with the detector 50 of Figure 3. The length of antenna 51 was 65 mm which was approximately equal to 1/4 of the microwave wavelength. The circuit was housed in metal enclosure 53 and antenna 51 was isolated from the circuit by means of PTFE plug 52.

The mobile phone employed for this work was an Ericsson Model T10 and the hands-free kit was the Telcom Universal Boom Mic and Earpiece.

An oscilloscope 54 (Hitachi type V-1565 100 MHz bandwidth) was used to measure the induced voltage in the detector 50. The reading accuracy was about 1 %.

### Result 1

With the detector and mobile phone antennas parallel to each other and separated by 40 mm:
Microwave peak voltage = 2.4V.
Therefore the near field strength = 2.4/0.065 = 37V/m.

### Result 2

With the Telcom hands-free kit connected in the standard mode to the mobile telephone.

The hands-free kit cable (approximately 1m long) acted as an antenna, and the nodes and antinodes of the radiation were detected at intervals of λ/2. The measurements were repeated a number of times: the position of the nodes and antinodes depended on the kinks and twists in the cable. Typical maximum voltages at the head set end were 0.3V corresponding to a field strength of 4.6V/m.

### Result 3

With the Telcom hands-free kit connected to the output electronics of the optical fibre, and the input electronics connected to the mobile phone. The optical fibre length was approximately 1m.

No microwave radiation was detected anywhere along the length of the Telcom cable. The measurement limit was better than 1mV.

Within the limits of experimental error, the fibre optic system reduces the microwave radiation field strength at the head set end by at least a factor of 1000, but in fact was not measurable.

## Claims

1. Telecommunications apparatus, comprising a first unit having a first transceiver for a first type of signal which is a microwave signal, a second transceiver for a second type of signal, and a first converter for converting said microwave signal into said second type of signal and vice versa, and a second unit having a third transceiver for said second type of signal, a fourth transceiver for a third type of signal which is an audio signal and a second converter for converting said second type of signal to said audio signal and vice versa, wherein the first unit and the second unit are connected by an optical fibre and wherein said second type of signal is a signal which is able to be transmitted along said optical fibre.

2. Telecommunications apparatus as claimed in claim 1, wherein the second type of signal is provided by an infra-red beam or by light in the visible part of the electromagnetic spectrum.

3. Telecommunications apparatus as claimed in claim 1 or 2, wherein the first and second unit are adapted to be joined together to form a single unit.

4. Telecommunications apparatus as claimed in any preceding claim, additionally comprising a third unit having a fifth transceiver for a fourth type of signal, a sixth transceiver for a fifth type of signal and a third converter for converting the fourth type of signal to the fifth type of signal, wherein the second unit additionally comprises a seventh transceiver for a receiving said fifth type of signal and a fourth converter for converting said fifth type of signal to said audio signal.

5. Telecommunications apparatus as claimed in claim 4, wherein said fifth type of signal is carried by an optical fibre between the second and third units.

6. Telecommunications apparatus as claimed in claim 4, wherein said fifth type of signal is a radio frequency signal, an infra red signal transmitted without a material link, or a hardwire connection.

7. An attachment for a mobile telephone of the type which has a transceiver for a microwave signal, a first converter for converting the microwave signal to a first type of signal, and an input/output for the first type of signal, which attachment comprises a first unit having a first transceiver for said first type of signal, a second transceiver for a second type of signal and a second converter for converting said first type of signal to said second type of signal, and a second unit having a third transceiver for said second type of signal and a third converter for converting said second type of signal into an audio signal, wherein the first unit and the second unit are connected by an optical fibre and wherein said second type of signal is a signal which is able to be transmitted along said optical fibre.

8. An attachment as claimed in claim 7, wherein said third converter converts the second type of signal first into an electrical signal, and then into an audio signal by means of a microphone and earphone combination.
